Europäisches Patentamt

European Patent Office

Office européen des brevets

(11) Veröffentlichungsnummer: **0 359 902**
**A2**

## EUROPÄISCHE PATENTANMELDUNG

(21) Anmeldenummer: 89107124.3

(51) Int. Cl.⁵: **B60R 21/26**

(22) Anmeldetag: 20.04.89

(30) Priorität: 21.09.88 DE 3832120

(43) Veröffentlichungstag der Anmeldung:
28.03.90 Patentblatt 90/13

(84) Benannte Vertragsstaaten:
**DE FR GB IT SE**

(71) Anmelder: **Bayern-Chemie Gesellschaft für flugchemische Antriebe mit beschränkter Haftung**

**D-8261 Aschau a. Inn(DE)**

(72) Erfinder: **Werner, Bernd**
**Josefstalerstrasse 4a**
**D-8162 Schliersse 2(DE)**
Erfinder: **Nilsson, Karl-Erik**
**Uhlandstrasse 51**
**D-8012 Ottobrunn(DE)**

(74) Vertreter: **Frick, Gerhard**
**Messerschmitt-Bölkow-Blohm GmbH**
**Patentabteilung Robert-Koch-Strasse**
**D-8012 Ottobrunn(DE)**

(54) **Gasgenerator.**

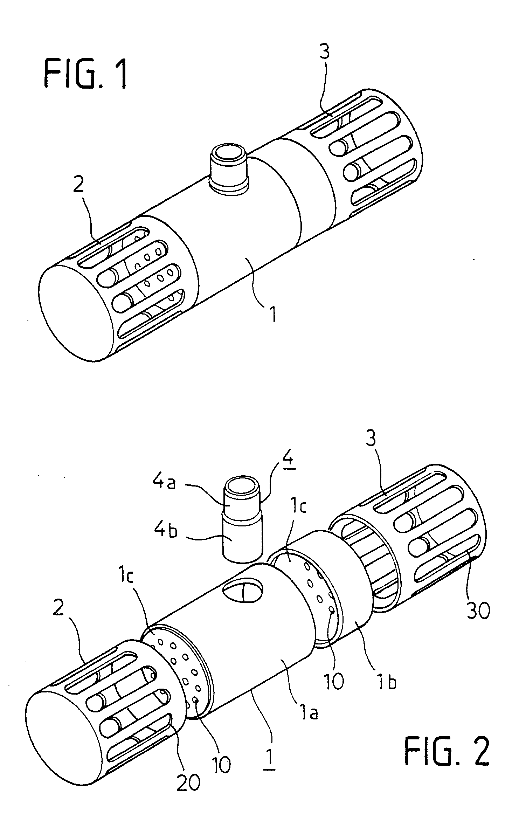

(57) Es ist ein im wesentlichen rohrföhrmiger oder zylindrischer Gasgenerator beschrieben und dargestellt (Fig. 1) der einen modularen Aufbau aufweist, eine günstige Herstellungs- u. sichere Einbauweise gestattet, insbesondere im Aufbau (z.B. am Armaturenbrett eines Kfz) für den Insassenschutz mittels von gezündetem Festtreibstoff generiertem Gas aufblasbarem Gaskissen.

FIG. 2

EP 0 359 902 A2

## Gasgenerator

Die Erfindung betrifft einen Gasgenerator nach dem Oberbegriff des Patentanspruchs 1. Das Prinzip dieses Gasgenerators ist aus der Automobiltechn. Zeitung Jahrgang 84 (1982) S. 77 und 78 bekannt.

Es sind bereits rohrförmige Gasgeneratoren für die Beifahrerseite bekannt, wo aber Anzünd-, Brenn- und Filterkammer, radial nachgeschaltet, sich über die gesamte Länge des Gasgenerators erstrecken. Dabei werden die großflächigen Kammerwandungen unnötig hohen Druckbelastungen ausgesetzt, die durch höheren Materialaufwand kompensiert werden müssen. Die ausschließlich radiale Gasführung ergeben ungünstigere Bedingungen für eine partikelausscheidende Umlenkung der Gase und den Einsatz eines teuren Filtermaterials über die gesamte Gasgeneratorlänge.

Die Anordnung hat auch den Nachteil, daß bei Änderung der Leistungsanforderungen, d.h. bei variierender Treibladungsmenge, nicht nur die Brennkammer, wie bei der neuen Erfindung, sondern alle anderen Teile, wie z.B. die Anzündanordnung und die Filterteile, auch verändert werden müssen.

Eine ältere rohrförmige Gasgenerator-Auslegung geht aus der Patentschrift DE-PS 23 30 194 hervor. Dieses Konzept hat aber die Nachteile, daß die von den beiden äußeren, verschreubten Deckeln abgestützten Stegringe und Bodenplatten nicht nur eine beschränkte Festigkeit, sondern auch eine ungenügende Dichtigkeit des Außengehäuses zur Folge hat. Aus diesem Grund wurde die Brennkammer separat innerhalb des Außengehäuses angeordnet, was erhebliche Komplikationen und sehr große Dimensionen mit sich bringt.

Nachteile bisheriger Lösungen:
Bekannte Systeme weisen den Nachteil auf, daß sie aus zwei Gasgeneratoren bestehen mit zwei Zündern, dazugehörigen Kabeln und Steckern und auch eine doppelte Endstufe im Sensor benötigen. Neben Kosten-Nachteilen ist die Baugröße dieser Systeme mit Integrationsschwierigkeiten im Fahrzeug verbunden.

Aufgabe der Erfindung ist es, einen Gasgenerator zu schaffen, der mit geringem Aufwand herstellbar ist und hohe Funktionszuverlässigkeit bietet.

Die Lösung der Erfindung ist im Kennzeichen des Patentanspruches 1 enthalten.

Ein wesentliches Merkmal der Erfindung und zugleich wesentlicher Vorteil besteht darin, daß der Gasgenerator aus mehreren topfförmigen Blechteilen zu einem fertigungsgerechten und festigkeitsmäßig optimalen, im wesentlichen rohrförmigen Baukasten-Gesamtgehäuse form- oder stoffschlüssig zusammengefügt ist, wobei die Hochdruck-beaufschlagte Brennkammer etwa kesselförmig ausgebildet ist, mit axial angeordneter Filterkammer den Mantel des Gasgenerator-Gesamtgehäuses bildet und eine Anzündeeinrichtung etwa mittig enthält, die in einem topfförmigen peripher (radial) angeordneten und mit Öffnungen versehenem Gehäuse untergebracht ist, das mit dem Gasgenerator-Mantel befestigt ist.

Weitere Vorteile der Erfindung:
Die Abgrenzung der drei Druckkammern mit jeweils kleinstmöglichen druckbeaufschlagten Flächen in Anzünd-, Brenn- und Filterkammer in axialer Anordnung. Dadurch günstigste Gasführung, Festigkeit, Gewicht und Baugröße. Außerdem anpassungsfähiges Baukastensystem mit günstigen Fertigungsbedingungen. Die axial verlaufende Gasführung erlaubt die Begrenzung des teuren Filtermaterials auf die Länge der Filterkammer.

Eine stoffschlüssige Verbindung der topfförmigen Teile sorgt für optimale Dichtigkeit und damit beste Voraussetzungen für sichere Unterbringung der chemischen Komponenten und für eine langjährige Funktionszuverlässigkeit. Darüber hinaus werden mutwillige Eingriffe weitestgehend verhindert.

Ein Ausführungsbeispiel der Erfindung ist in der nachfolgenden Figurenbeschreibung erläutert, ohne daß die Erfindung hierauf beschränkt wäre. Abwandlungen sind für den Fachmann ohne weiteres möglich. Zur Erfindung gehören auch alle Kombinationen und Unter-Kombinationen der dargestellten beschriebenen und beanspruchten Merkmale.

In den beigefügten Zeichnungen zeigen rein schematisch:

Fig. 1 den Gasgenerator im zusammengebauten Zustand (ohne Filtereinsätze),

Fig. 2 eine Explosionsdarstellung vor dem Zusammenbau,

Fig. 3 eine Fügeverbindung von Teilen des Gasgenerators nach dem Elektronenstrahl- oder Laserstrahlverfahren,

Fig. 4 eine Fügeverbindung durch Schweißen, Schrumpfen oder Kleben,

Fig. 5 eine Fügeverbindung durch Bördeln oder Döppern oder alternativ Schrumpfen oder Kleben,

Fig. 6 eine Fügeverbindung durch Bördeln oder Rollen,

Fig. 7 eine Fügeverbindung durch Reibschweißen einseitig,

Fig. 8 eine Fügeverbindung durch Reibschweißen beidseitig einer Wand,

Fig. 9 eine Fügeverbindung mittels Schrauben und Sichern,

Fig. 10 eine Fügeverbindung durch Sicken und Rollen (Roll-Bond-Verfahren).

Wie Fig. 1 zeigt, besitzt der Gasgenerator eine Gaserzeugungskammer 1 und wenigstens eine vorzugsweise zwei Filterkammern 2 und 3, wobei diese Hauptteile aus Blech gefertigt und zusammengefügt werden, zu einer im wesentlichen röhrförmigen zylindrischen Baueinheit, wie sie in Fig. 1 dargestellt ist. Weitere Einzelheiten sind aus der nachfolgenden Beschreibung ersichtlich.

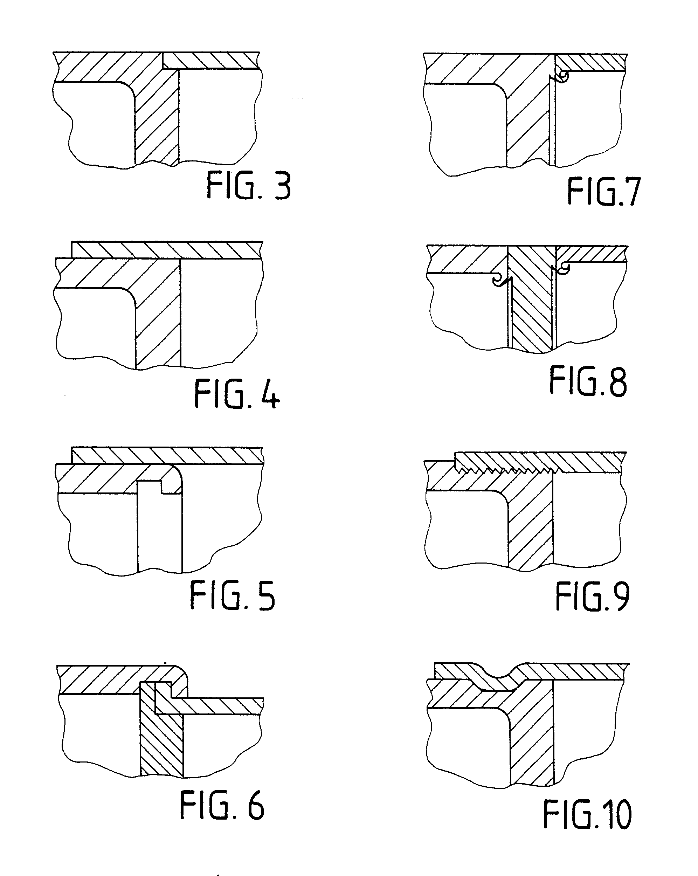

In Fig. 3 ist der modulartige Aufbau des Gasgenerator vor seinem Zusammenbau ersichtlich. In Fig. 1 und in Fig. 2 nicht dargestellt sind die Filtereinsätze wie an sich bekannt (vgl. eingangsgenannter Automobiltechn. Zeitschrift). Die genannten Hauptteile 1 bis 3 sind in Blechbauweise ausgeführt, wobei die Verwendung von Blechen bereits beschrieben ist in der Deutschen Auslegeschrift 29 15 202 der Anmelderin. Die dort beschriebenen dünnen Bleche sind auch hier anwendbar, ebenso die Treibsätze, Zünder etc..

Die Erfindung unterscheidet sich vom Stand der Technik wesentlich durch den neuartigen Aufbau und Zusammenbau.

Die Gaserzeugungskammer 1 enthält den Treibsatz und den Zünder bzw. die Anzündeinheit 4 zum elektrischen Initiieren einer Zündung der Zündpillen des Treibsatzes von außen, insbesondere wenn eine Sensorschaltung einen Crashfall ermittelt hat, zwecks Aufblasen des Schutzkissens.

Bei der Erfindung bildet die Gaserzeugungskammer 1 das Zentrum an das angebaut wird. Sie besteht aus den Teilen 1a und 1b, welche ungleich sind, um fertigungstechnische Vorteile, insbesondere beim Schweißen zu ermöglichen. Die Filterkammern 2 und 3 werden an die zentrale Gaserzeugungskammer angefügt so, daß die Filterkammern 2 bzw. 3 in axialer Richtung der Hauptachse (Längsachse) der Gaserzeugungskammer 1 angeordnet sind. Die Gaserzeugungskammer 1 enthält den pyrotechnischen Treibsatz und entwickelt Druckgas, wenn von dem zentral jedoch um 90° zur Längs achse versetzt angeordneten Zünder 4 ein Zündimpuls von außen erhalten wird. Das erzeugte Druckgas wird durch die Düsenöffnungen 10 in den Düsenplatten 1c zu der oder den Filterkammern 2/3 durchströmt, dabei verwirbelt und umgelenkt, in dem es die Längsschlitze 20, 30 in den Filterkammern 2, 3 peripher (radial) verläßt, wobei die mit Öffnungen versehene periphere Austrittswand jeder Filterkammer den Mantel des Gasgenerator-Gehäuses bildet, der mit der Schutzeinrichtung verbunden ist.

Bei der Erfindung werden die Hauptteile so zu einer zylinderförmigen Einheit zusammengefügt. Die Hauptteile sind napfförmig ausgebildet und die Näpfe bzw. Töpfe sind im Bereich der Kreisflächen (Düsenplatten oder Scheiben) aneinander gefügt.

Diese Kreisflächen bilden die Stirnseiten. Die aneinander Fügung kann flächenhaft, linienhaft oder mittels vieler Punkte geschehen, entweder peripher oder über die Kreisflächen verteilt, je nach angewandtem Fügeverfahren und Fügemitteln und zu fügenden Materialien.

Bei dem Gasgenerator der Erfindung wird die Gaserzeugungskammer das Zentralmodul bilden und die Filterkammern 2, 3 werden an dieses mit ihren Stirnseiten angebaut, so daß die verlängerte Hauptachse des Teils 1 auch die Hauptachse der Teile 2 und 3 bildet. Die Düsenplatten oder Scheiben, welche eben oder gewölbt ausgeführt werden können, weisen eine solche Anzahl von Düsen auf, die sowohl nach Zahl ,Größe und Verteilung vom Fachmann nach gewünschter Strömung ausgewählt werden, d.h. wenn eine stärkere Verwirbelung gewünscht wird, wird insbesondere ihre Zahl erhöht werden. Die Gaserzeugungskammer 1 wird erst zusammengesetzt, wenn der Treibsatz eingefüllt ist. Gleiches gilt für die Filterkammern 2 und 3 bezüglich der Filter. Die Filterkammern 2 und 3 werden dann symethrisch angefügt an die Gaserzeugungskammer 1 und zwar symethrisch bezogen auf die Mittelachse des Zünders 4, der seinerseits einen 90°-Winkel zur Hauptachse des Zylinders bildet, jedoch zentral innerhalb der zusammengefügten Gaserzeugungskammer, im Beispiel genau mittig angeordnet ist. Der Zünder ist als solcher ebenfalls in einem napfförmigen Gehäuse angeordnet und dieses napfförmige Gehäuse 4b wird an das Blechgehäuse der Gaserzeugungskammer 1 fest und dicht eingefügt. Die Druckerzeugungskammer 1 weist die größte Wandstärke auf, weils sie am höchsten druckbelastet wird und die Teile 2 und 3 eine geringere Wandstärke als Teil 1.

Die Teile des Gasgenerators bestehen - wie an sich bekannt - aus Blechen und bevorzugt aus gleichen oder ähnlichen Materialien, insbesondere jedoch aus fügeverträglichen Materialien.

Als besonders geeignet erwiesen haben sich die folgenden Fügeverfahren: Elektronenstrahlschweißen, Laserstrahlschweißen, Reibschweißen, Schrumpfen, Metallkleben mit Klebstoffen wie aus der Luft- und Raumfahrt bekannt, weil auch dort gleiche oder ähnliche metallische Leichtbaumaterialien verwandt werden.

Ebenso verwendet werden kann ein Bördeln oder Döppern oder ein Rollen (Roll-Bond-Verfahren) sowie das Schrauben und Sichern (dabei Abdichten).

Wesentlich ist, daß hier korrosionsfeste Materialien verwendet werden, wegen der chemischen Aggressivität des Treibsatzes und daß die verwendeten Materialien in solcher Wandstärke ausgeführt werden, daß sie den anstehenden Druckbelastungen standhalten. Die weitere Forderung ist die absolute Dichtheit der Fügeverbindungen.

Der Fachmann wird daher unter diesen vorstehenden vorallem sicherheitstechnischen aber auch nach fertigungstechnischen sowie wirtschaftlichen Gesichtspunkten seine Auswahl treffen, insbesondere hinsichtlich des anzuwendenden Fügeverfahrens. Dabei kann er selbstverständlich verschiedene Fügeverfahren miteinander kombinieren, d.h. Fügestellen, Linien oder Flächen zwischen den zusammenzufügenden Teilen nicht nur nach gleichem Verfahren (sämtlich) sondern auch nach verschiedenen Verfahren zusammenfügen.

In den Fig. 3 bis 10 sind die einzelnen Fügeverfahren rein beispielsweise anhand jeweils einer einzelnen Fügestelle zwischen Hauptteilen 1, 2, 3 im Detail dargestellt ohne daß es einer besonderen Erläuterung hierfür bedarf.

**Ansprüche**

1. Gasgenerator, eine Gaserzeugungskammer mit Zünder für einen Treibsatz und wenigstens eine Filterkammer enthaltend, wobei diese Hauptteile aus Blech gefertigt und zusammengefügt werden für den Einsatz bei einer Aufprallschutzeinrichtung zum Schutz von Insassen eines Fahrzeuges, **dadurch gekennzeichnet, daß**
- die Gaserzeugungskammer (1) das Zentrum bildet, an das mit jeweils kleinstmöglicher druckbeaufschlagter Fläche form- oder stoffschlüssig,
- eine/mehrere Filterkammer(n) (2,3) angefügt wird/werden, so daß
- die Filterkammer(n) (2,3) in axialer Richtung der Hauptachse der Gaserzeugungskammer angeordnet ist/sind, wobei Druckgas entsteht, wenn der pyrotechnische Treibsatz vom seinerseits zentral in der als kesselartige Druckkammer ausgebildeten Gaserzeugungskammer angeordneten Zünder einen Impuls zum Zünden erhält,
- das erzeugte Druckgas nach axialem Durchströmen der Filterkammer(n) (2,3) diese nach Umlenkung peripher (radial) verläßt, wobei die mit Öffnungen versehene periphere Austrittswand den Mantel des Gasgenerator-Gehäuses bildet, das mit der Schutzeinrichtung verbunden ist.

2. Gasgenerator nach Anspruch 1, **dadurch gekennzeichnet, daß** die Hauptteile zu einer zylinderförmigen Einheit zusammengefügt sind.

3. Gasgenerator nach Anspruch 1 oder 2, **dadurch gekennzeichnet, daß** die Hauptteile napfförmig ausgebildet sind.

4. Gasgenerator nach Anspruch 3, **dadurch gekennzeichnet, daß** die Näpfe bzw. Töpfe (1-3) im Bereich der Kreisflächen (Stirnseiten oder Scheiben 10) aneinandergefügt sind, wobei die Scheiben (1c) mit Düsen versehen sind.

5. Gasgenerator nach einem der vorhergehenden Ansprüche, **dadurch gekennzeichnet, daß** die Gaserzeugungskammer (1) in deren Boden eine erforderliche Zahl/Größe/Verteilung Düsen (10) angeordet sind, das Zentralmodul bildet an deren Stirnseiten die andere(n) Hauptteile angefügt sind.

6. Gasgenerator nach einem der vorhergehenden Ansprüche, **dadurch gekennzeichnet, daß** die Filterkammern (2,3) symetrisch an das Zentralmodul (1) angefügt sind.

7. Gasgenerator nach einem der vorhergehenden Ansprüche, **dadurch gekennzeichnet, daß** die Anzündeinheit (4) in einem napfärmigen Gehäuse (4a, 4b) angeordnet ist, das zentral in der Gaserzeugungskammer befestigt ist.

8. Gasgenerator nach einem der vorhergehenden Ansprüche, **dadurch gekennzeichnet, daß** die Gaserzeugungskammer (1) aus 2 ungleichen Teilen (1a, 1b) zusammengefügt ist.

9. Gasgenerator nach einem der vorhergehenden Ansprüche, **dadurch gekennzeichnet, daß** die Hauptteile (1-3) entsprechend ihrer unterschiedlichen in Betrieb entstehenden Druckbelastung erforderlichen Wandstärke aneinandergefügt sind.

10. Gasgenerator nach einem der vorhergehenden Ansprüche, **dadurch gekennzeichnet, daß** die Hauptteile (1-3) aus gleichen oder ähnlichen Material bestehen.

11. Gasgenerator nach einem der vorhergehenden Ansprüche, **gekennzeichnet** durch EB-Schweißen (Elektronenstrahl) als Fügeverfahren zwischen zwei Teilen (1-3),

12. Gasgenerator nach einem der vorhergehenden Ansprüche, **gekennzeichnet** durch Laserstrahlschweißen als Fügeverfahren zwischen zwei Teilen (1-3),

13. Gasgenerator nach einem der vorhergehenden Ansprüche, **gekennzeichnet** durch Reibschweißen als Fügeverfahren zwischen zwei Teilen (1-3),

14. Gasgenerator nach einem der vorhergehenden Ansprüche, **gekennzeichnet** durch Schrumpfen als Fügeverfahren zwischen zwei Teilen (1-3),

15. Gasgenerator nach einem der vorhergehenden Ansprüche, **gekennzeichnet** durch Metallkleben als Fügeverfahren zwischen zwei Teilen (1-3),

16. Gasgenerator nach einem der vorhergehenden Ansprüche, **gekennzeichnet** durch Bördeln oder Döppern oder Rollen (roll-bonding) als Fügeverfahren zwischen zwei Teilen (1-3),

17. Gasgenerator nach einem der vorhergehenden Ansprüche, **gekennzeichnet** durch Schrauben und Sichern als Fügeverfahren zwischen zwei Teilen (1-3).

# FIG. 1

# FIG. 2

10 558

FIG. 3

FIG.7

FIG. 4

FIG.8

FIG. 5

FIG.9

FIG. 6

FIG.10

10 558